# EUROPEAN PATENT SPECIFICATION

(11) **EP 1 505 871 B1**
(45) Date of publication and mention of the grant of the patent: **24.04.2013**
(21) Application number: 03799773.1
(22) Date of filing: 12.05.2003
(51) Int. Cl.: A01N 1/00

(54) **PRESERVATION OF RNA AND MORPHOLOGY IN CELLS AND TISSUES**
KONSERVIERUNG VON RNA UND MORPHOLOGIE IN ZELLEN UND GEWEBEN
CONSERVATION D'ARN ET DE LA MORPHOLOGIE DANS DES CELLULES ET DANS DES TISSUS

(30) Priority: 10.05.2002 US 379015 P
(43) Date of publication of application: 16.02.2005
(73) Proprietor: University of Miami, Miami, FL 33136 (US)
(72) Inventor: VINCEK, Vladimir, Aventura, FL 33180 (US); NASSIRI, Mehdi, Miami, FL 33136 (US); NADJI, Mehrdad, Miami, FL 33158 (US); MORALES, Azorides, R., Coral Gables, FL 33156 (US)
(74) Representative: Campbell, Patrick John Henry
(86) International application number: PCT/US2003/014607
(87) International publication number: WO 2004/033622

(56) References cited:
- EP-A2- 1 085 098
- WO-A1-00/00813
- DE-A1- 19 928 820
- US-B1- 6 290 981
- US-B1- 6 361 933
- US-B2- 6 528 641
- DATABASE BIOSIS [Online] BIOSCIENCES INFORMATION SERVICE, PHILADELPHIA, PA, US; December 2000 (2000-12), WARMINGTON ADRIAN R ET AL: "Evaluation of ethanol-based fixatives as a substitute for formalin in diagnostic clinical laboratories" XP002598772 Database accession no. PREV200100048663 & JOURNAL OF HISTOTECHNOLOGY, vol. 23, no. 4, December 2000 (2000-12), pages 299-308, ISSN: 0147-8885
- P.MAXWELL ET AL.: "Use of alcohol fixed cytospins protected by 10% polyethylene glycol in immunocytology external quality assurance" J. CLIN. PATHOL., vol. 52, 1999, pages 141-144, XP002598773
- BROMBERG L E ET AL: "TRANSPORT OF PROTEINS DISSOLVED IN ORGANIC SOLVENTS ACROSS BIOMIMETIC MEMBRANES" PROCEEDINGS OF THE NATIONAL ACADEMY OF SCIENCES OF THE UNITED STATES (PNAS), NATIONAL ACADEMY OF SCIENCE, US LNKD- DOI:10.1073/PNAS.92.5.1262, vol. 92, no. 5, 1 February 1995 (1995-02-01), pages 1262-1266, XP000651685 ISSN: 0027-8424
- DATABASE MEDLINE [Online] US NATIONAL LIBRARY OF MEDICINE (NLM), BETHESDA, MD, US; May 1996 (1996-05), TAKAHASHI R ET AL: "Freeze substitution and freeze drying for stable, long-term preservation of cytologic specimens for immunostaining." XP002598774 Database accession no. NLM8669168 & ACTA CYTOLOGICA 1996 MAY-JUN LNKD- PUBMED:8669168, vol. 40, no. 3, May 1996 (1996-05), pages 396-400, ISSN: 0001-5547

## Description

### BACKGROUND OF THE INVENTION

### 1. Field of the Invention

The present invention relates to a composition containing polyethylene glycol (PEG) and methanol for preservation of a tissue, especially at ambient temperature. It may also be used for tissue storage. A tissue preserved with and/or stored in compositions of the present invention maintains its morphological characteristics, the recognition of its antigens by cognate antibodies, and the integrity of its nucleic acids (e.g., DNA and RNA) without requiring refrigeration or freezing.

### 2. Description of the Related Art

Cytological and histological processing prevents autolysis of cells and tissue, respectively, after their removal from a living body. Moreover, the structure of individual cells and their organization within the tissue are stabilized by such processing. There is a requirement, however, for sophisticated procedures and dedicated instruments in most cases to process cells and tissues in a clinical setting. Therefore, specimens are usually collected in physician offices or surgical suites, and transported to a centralized pathology service. Suitable compositions for the preservation and/or storage of a cell or tissue are needed to ensure that autolysis is prevented and that cellular morphology, antigen, and nucleic acid are maintained until processing.

Furthermore, genetic analysis is becoming more important by itself or complementary to cell staining, enzyme assays, and immunological techniques in pathology. Expression of mutant genes or the over-expression of normal genes can be examined by analyzing nucleic acid. In situ detection of RNA can localize transcripts within tissue containing different types of cells; this can also be accomplished by detecting RNA that has been extracted from different portions of sorted cells or sectioned tissue. Mutations may be seen in DNA or RNA. Alternating cytologic/histologic and genetic analyses of sorted cells or sectioned tissue can be used to correlate pathological events at cellular and molecular levels. Genetic analysis will be possible only if degradation is prevented and macromolecular structures are stabilized. But many preservative compositions and fixatives cause irreversible damage (e.g., activity of the ubiquitous nuclease enzymes, hydrolysis of phosphodiester bonds, and/or deamidation of bases) to the structure of nucleic acids (e.g., DNA, and especially RNA) and reduce their yield, thereby limiting the usefulness of genetic techniques for diagnosis and research applications. Consequently, preservation of nucleic acids in a fresh cell or tissue usually requires special handling, such as immediate processing or freezing, to allow examination by a combination of cytologic, histologic, immunologic, and genetic techniques.

The composition disclosed herein may be used to advantage in conventional tissue processing or other processing methods such as described in U.S. Patent 6,207,408; WO 01/44783; and WO 01/44784. Conventional techniques are described in general references such as Thompson (Selected Histochemical and Histopathological Methods, Springfield, IL: Thomas, 1966), Sheehan & Hrapchak (Theory and Practice of Histotechnology, St. Louis, MO: Mosby, 1973), Bancroft & Stevens (Theory and Practice of Histological Techniques, New York, NY: Churchill Livingstone, 1982); Boon & Kok (Microwave Cookbook of Pathology, Leiden, NL: Coulomb, 1989); Woods & Ellis (Laboratory Histopathology, New York, NY: Churchill Livingstone, 1994).

U.S. Patents 3,389,052; 3,546,334; 5,104,640; 5,256,571; 5,849,517; and 6,204,375; Florell et al. (Mod. Pathol., 14:116-128, 2001); Bostwick et al. (Arch. Pathol. Lab. Med., 118:298-302, 1994); Dimulescu et al. (Mol. Diagnosis, 3:67-71, 1998); Maxwell et al. (J. Clin. Pathol., 52:141-144, 1999); Shibutani et al. (Lab. Invest., 80:199-208, 2000); and Gillespie et al. (Am. J. Pathol., 160:449-457, 2002) describe preservative and fixative solutions.

A.R. Warmington et al. (J. of Histotechnology 23(4), 12.2000, 299-308) disclose compositions for preserving tissue comprising 60% ethanol, 20% methanol and 7-20% polyethylene glycol. A preferred composition comprises 60% ethanol, 20% methanol, 7% polyethylene glycol and 13% water.

Compositions of the present invention are novel and nonobvious. They are nonaqueous solutions comprising PEG and methanol, which preserve morphological characteristics, recognition of antigen by cognate antibody, and integrity of nucleic acid (e.g., DNA and RNA) in solid tissue without the inconvenience of cooling or freezing the specimen to prevent degradation. Thus, solid tissue can be stored for long times at ambient temperature. Further advantages of and improvements due to the invention are discussed below.

### SUMMARY OF THE INVENTION

It is an object of the invention to provide a composition for tissue preservation and/or storage. The composition contains a polyethylene glycol and methanol according to claim 1. It is conveniently a nonaqueous solution with a melting point that is substantially below the ambient temperature. Tissues may be preserved or stored for histology. Antigen or nucleic acid from the tissue may be analyzed. Preservation of morphology can be assessed with a microscope. Antigen and nucleic acid preservation may be assessed by yield of at least partially nondegraded antigen and nucleic acid after extraction from the tissue, or enhanced antibody binding and complementary probe hybridization to the tissue. Also provided are methods of making and using the composition.

Other objects of the invention are a specimen holder and a bulk container with the composition.

A tissue preserved and/or stored in accordance with the invention may be further processed for cytologic, histologic, immunologic, and/or genetic analysis. A section or block tissue obtained after impregnation may also be provided. Nucleic acid (e.g., DNA or RNA) extracted from preserved, stored, or processed solid tissue is yet another embodiment of the invention.

Further embodiments of the invention are described in detail below or would be apparent to the skilled artisan from the disclosure herein.

### DESCRIPTION OF THE DRAWINGS

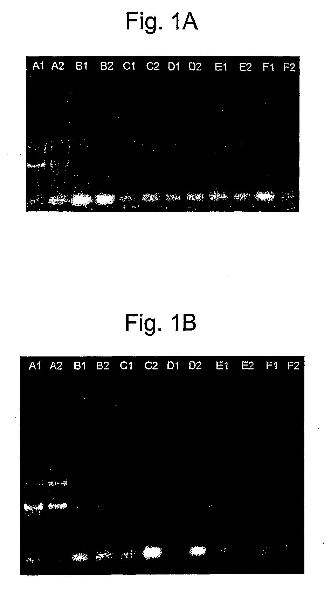

Figure 1 shows an ethidium bromide stained agarose gel where RNA was been separated under denaturing conditions. After tissue was incubated in different compositions for three days (Fig. 1A) or one week (Fig. 1 B) at about 25°C, RNA was extracted using a Trizol RNA Isolation kit (Gibco BRL). Each sample (A to F) was run in duplicate lanes (1 and 2).

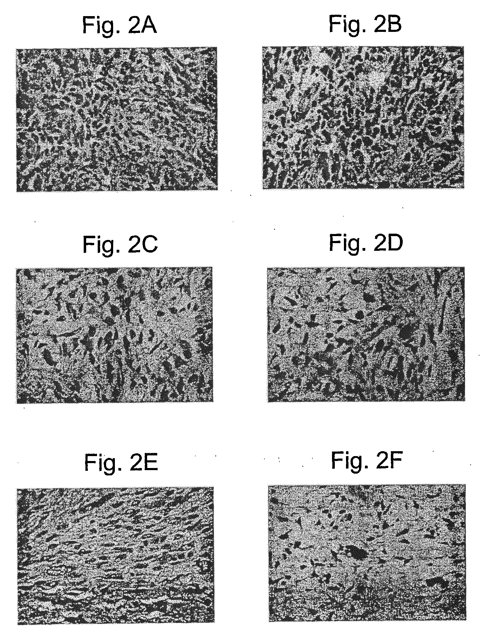

Figure 2 shows hematoxylin-eosin stained tissue sections. Tissues were incubated in either 10% polyethylene glycol and 90% methanol (Figs. 2A, 2C, 2E) or RNA-later (Figs. 2B, 2D, 2F) for 48 hr (Figs. 2A-2B), 72 hr (Figs. 2C-2D), or one week (Figs. 2E-2F) at about 25°C. They were processed either by the conventional method or in accordance with the method described in U.S. Patent 6,207,408, and then stained. Magnification is 400 x (Figs. 2A-2F).

### DESCRIPTION OF SPECIFIC EMBODIMENTS OF THE INVENTION

Compositions described herein were developed for their chemical simplicity, ability to preserve morphologic and genetic characteristics of tissue, and convenience and practicality of usage at ambient temperature. A tissue may be stored therein and serve as an archival source for cytology, histology, and/or genetic analysis. It may be preserved and/or stored for prospective or retrospective study. Although not preferred, storage in the composition of the present invention may also follow contact of the tissue with other preservatives and/or fixatives.

The tissue may be processed as disclosed herein. It may be a solid tissue such as, for example, parenchyme, connective or fatty tissue, heart or skeletal muscle, kidney, liver, skin, smooth muscle, or spleen. Optionally, calcified tissue may need to be demineralized before further processing. But "tissue" does not usually refer to single cells from a biological fluid (e.g., ascites, blood, pleural exudate), cell suspensions from the aspiration of organs or lavage of body cavities, or cell smears. The tissue may be a tumor (benign or malignant), cancerous or precancerous, obtained from an animal or human subject affected by disease or suspected of same (normal or diseased), or be affected by other pathology. It may be obtained by autopsy, biopsy (e.g., endoscopy or laparoscopy), or surgical resection. Tissue should be placed in contact with the composition within one to 30 min after death or removal from the body but this time may be extended by cooling it on ice. A piece of tissue (e.g., a slice or block) may be preserved with and/or stored in the composition of the invention; tissue that has been preserved and/or stored may also be embedded in a medium. Tissue may be analyzed by serial reconstruction with different analyses applied to adjacent sections. Negative or positive selection (e.g., microdissection with optical tweezers or laser ablation) may be used to isolate cell populations.

Conventional histological processing usually involves a fixing agent that cross links reactive biomolecules (e.g., aldehyde-containing aqueous solution like buffered formalin), although sometimes a fixing agent that is a coagulant or precipitant (e.g., a ketone) is used. The tissue specimen is often dehydrated through a graded series of ethanol (e.g., from 70% to 100%) and then cleared in a series of xylenes prior to impregnation. Processing usually occurs over several hours or days (e.g., overnight).

Histological processing in accordance with the method described in U.S. Patent 6,207,408, may be comprised of incubation in a series of nonaqueous solutions under various conditions of time, temperature, and pressure. The tissue may be fixed, dehydrated, optionally cleared, and impregnated; alternatively, the tissue may be hardened and impregnated. The boundaries of each step may overlap because a chemical component of one of the series of solutions has two or more activities (e.g., fixing agent, dehydrating agent, and clearing agent). Tissue processing may be completed in 45 min, one hour or less, 90 min or less, or two hours or less. Rapid and continuous processing is accomplished by decreasing the thickness of tissue specimens, use of a series of nonaqueous solutions composed of admixtures, heating with microwave energy, driving solvent/solute exchange in tissue specimens under pressure or by dilution, mechanical agitation, addition of an enhancer or surfactant, or a combination thereof.

The admixture may include at least one fixing agent, at least one dehydrating agent, and at least one agent that clears tissue and/or removes fat (e.g., chosen from alcohols, ketones, xylenes). Another admixture may include at least one clearing agent and at least one impregnating agent (e.g., xylenes, waxes). The tissue specimen may be impregnated in a wax solution comprised of a mixture of different chain lengths (e.g., mineral oil which is liquid and paraffin which is solid at ambinent temperature). It should be noted that although many chemicals have multiple activities, preferred admixtures contain more than one chemical. Preferably, an admixture contains at least two or three different chemicals (e.g., isopropanol, PEG, and acetone; isopropanol, acetone, and paraffin). Tissue specimens may be 3 mm or less in their smallest dimension to allow adequate diffusion: e.g., the thickness of a tissue slice or block may be between 0.5 mm and 3.0 mm thick, preferably 2.0 mm or less, more preferably 1.5 mm or less, and most preferably 1.0 mm or less. See U.S. Patent 6,207,408 and its disclosure which is incorporated by reference herein.

Embedding medium may be nitrocelluloses, plastics, resins, and waxes. Tissue processing serves to irreversibly inactivate enzymes responsible for autolysis and degradation of biopolymers (e.g., nucleic acids, protein, antigens). Therefore, blocks of embedded tissue or sections thereof may also be stored. Nucleic acids (e.g., DNA or RNA) may by extracted from the tissue or sections, preferably after removal of the embedding medium. A tissue section may be between 3 µm to 6 µm thick (nitrocellulose or wax) or 0.5 µm to one µm thick (plastic or resin).

Studies with tissues preserved in compositions of the present invention indicate better preservation of nucleic acids than with conventional preservative solutions. The fresh tissue is contacted with the composition in accordance with the present invention, and can be processed for cytologic, histologic, immunologic, and/or genetic studies soon after delivery to the laboratory, or archival material may be stored and made available for future research and other applications. Improvements are observed in the yield of genetic material, the stability of the genetic material in archival form, the size and integrity of the genetic material, and reducing chemical modification of the genetic material in comparison to the prior art. Serial reconstruction may use the same or different analyses on adjacent sections. Samples may be preserved at different times and preserved for later analysis. Preserved tissue is suitable for prospective or retrospective study.

The preservative composition of the present invention comprises polyethylene glycol (PEG). The PEG preferably has a melting point below ambient temperature. It has an average molecular weight of 600 daltons or less, more preferably about 400 daltons or less, and even more preferably about 300 daltons or less; the average molecular weight may be between 100 to 600 daltons, or between 200 daltons to 400 daltons. The term "about" when referring to the average molecular weight of PEG means that a variation of 10, 25 or 50 daltons is permissible. The higher molecular weight PEG (e.g., 1000 average molecular weight or more) are not preferred although they may be present in amounts of less than 5%, 10% or 20% of the molecular weight distribution. The melting point of PEG 400 is about 4°C to about 8°C and PEG 600 is about 20°C to about 25°C. The melting point of PEG used in the composition may be 37°C or less, 32°C or less, 27°C or less, 22°C or less, 15°C or less, 10°C or less, or 5°C or less; the lower melting points are preferred for tissues that are refrigerated or chilled during storage.

The PEG concentration in the present invention is 15% (v/v) or less, and 10% (v/v) or more, and any intermediate range thereof. The term "about" refers to PEG concentrations with a variation of 1% (v/v) or 2.5% (v/v). PEG has a density of about 1.1 to 1.2 gm/ml depending on its molecular weight so the concentrations given herein may be converted between weight and volume measurements using 1.1 as the specific gravity.

The preservative composition of the present invention also comprises methanol. Alcohols such as, for example, ethanol are not effective to preserve tissue for both morphologic and genetic analyses. But most histotechnologists prefer ethanol over methanol and would not be motivated to substitute between alcohols because of methanol's volatility, flammability, and cost. But in accordance with the teachings of the present invention, methanol is required for effective preservation of tissue. Fixatives which cross link reactive groups (e.g., aldehydes, ketones) are not required.

The methanol concentration in the present invention is 90% (v/v) or less, and 85% (v/v) or more, and any intermediate range thereof. The term "about" refers to methanol concentrations with a variation of 2.5% (v/v) or 5% (v/v). Methanol has a density of about 0.79 gm/ml so the concentrations given herein may be converted between weight and volume measurements using 0.79 as the specific gravity.

Special procedures such as, for example, agitation/shaking, microwaving, ultrasound, heating or cooling from ambient temperature, freezing, or immediate processing are not required for effective preservation in accordance with the present invention. The invention allows preservation and/or storage at ambient temperature (e.g., below 42°C, 37°C, or 30°C; between 15°C to 30°C, or 20°C to 25°C). Thus, low temperatures (e.g., about 4°C or below 15°C) are not required for preservation but may be used for storage. For a gram of tissue, about 10 ml to 25 ml of the composition may be used as a preservative and/or storage medium. Tissue may sliced thinly (e.g., about one mm, 1.5 mm, 2 mm, 2.5 mm, 3 mm, 3.5 mm, or 4 mm or less in the slice's smallest dimension) to encourage passage of the composition into the tissue. Storage may be for more than one week, two weeks, one month, three months, six months, or one year.

The composition of the present invention (i.e., a nonaqueous solution at ambient temperature) may be manufactured by mixing PEG and methanol in amounts according to claim 1 and appropriate to achieve desired concentrations. Minor amounts of other chemicals may be tolerated if they do not affect the composition's ability to act as a preservative. While the composition initially does not contain added water, there may be a minor amount of water present because of the hygroscopic properties of PEG and methanol or later extraction of water from the tissue.

The composition of the present invention may be provided within a tissue holder, which is preferentially adapted to immerse the tissue and avoid spillage. A holder may have a total volume of 30 ml to 50 ml, which is large enough for one or more gram-sized pieces of tissue to be immersed in the composition (e.g., at least 50-90% of the total volume). For example, a glass or plastic vial with an attached or separate closure (e.g., fitted lid or cap) may be used; alternatively, a plastic bag with a sealable portion may require elimination of empty spaces to ensure immersion. Preferred is a screw cap with a gasket to prevent spillage that is threaded on a nonopaque vial. Larger volumes (e.g., liter or gallon) may be provided in a bottle, bucket, or carboy with spigot. The holder may be provided with a container (e.g., hinged cassette, mesh bag, porous sponge) that can be placed therein and which surrounds small pieces of tissue and encourages solution exchange. The holder may be adapted for solid tissue such that pieces thereof are immersed in the composition. Preferentially, the solid tissue is surrounded on all surfaces by reducing air pockets in the holder and/or having a container therein.

Tissue holders may be packaged between a half-dozen to a gross of units (e.g., 25 or 100) in a carton; holder and container may be separately packaged in a single-use kit to collect tissue. It would be convenient to mark each holder with an individual identifier (e.g., alphanumeric printing, bar code) or a writeable surface to customize the identifier (e.g., information about source of the tissue or analysis to be performed). Unlike holders for blood or pap smears or single cell suspensions, having a slide or swab contained therein is not preferred because they would be of limited usefulness for solid tissues.

### TISSUE PROCESSING

Fixation initiates hardening of the tissue specimen, and preserves morphology by stabilizing proteins and halting degradation. Without chemical fixation, endogenous enzymes will catabolize and lyse the cell, and the tissue's morphology will be altered. Indications that fixation was inadequate can include: disassociation of tissue structures, bubbles/holes in tissue sections, poor and irregular staining, shrunken cells, clumping of cytoplasm, condensation and less distinct nuclear chromatin, and autolysis/hemolysis of erythrocytes. Fixation with acetone is usually accomplished in minutes instead of hours because long exposure causes the tissue to become brittle and shrink. In contrast to fixation by formalin, ketones and alcohols are believed to fix tissue by physically stabilizing proteins by coagulation or precipitation without chemically reacting with them (e.g., aldehyde-mediated cross linking reactive groups).

Dehydration removes water from the tissue specimen to promote hardening. Replacement of water in the tissue specimen with a dehydrating agent also facilitates subsequent replacement of the dehydrating agent with material used for impregnation. This solvent/solute exchange is enhanced by using a volatile solvent for dehydration. Failure to dehydrate the specimen can lead to inadequate impregnation, poor ribbon formation during sectioning, clefts in tissue sections where water was not removed, dissociation of structures, water crystals in tissue sections, and poor staining.

Optionally, fat is removed from the tissue specimen with a solvent because fat impairs clearing and impregnation. Inadequate fat removal can result in spreading artifacts of tissue sections, wrinkling of tissue sections, and poor staining. Also optional is clearing the tissue specimen. The clearant extracts solvents used for dehydrating and/or defatting from the tissue specimen if they are not miscible with the impregnating agent. The tissue may become "clear" and its opacity may be reduced by the extraction.

Finally, once the tissue specimen is suitably fixed and dehydrated, it is hardened by impregnation with and/or embedded in an agent such as nitrocellulose, plastic, resin, or wax. Appropriate hardening of the tissue specimen with adequate preservation of morphology is required prior to placing the impregnated specimen in a block and cutting ten micron or thinner sections with a microtome knife. Preferred impregnation materials are commercial wax formulae, mixtures of waxes of different melting points (e.g., liquid mineral oil and solid paraffin), and PARAPLAST medium. Paraffin has been chosen for use in the examples herein because it is inexpensive, easy to handle, and ribbon sectioning is facilitated by the coherence of structures provided by this material.

Following impregnation, the tissue specimen can be embedded to produce a block. The agent used to embed the tissue specimen is preferably the same as the material used for impregnation, but a different impregnating agent may also be used. The blocked tissue specimen can be mounted on a microtome to cut sections of between 0.5 µm and 50 µm, preferably between 2 µm and 10 µm. The tissue sections may be further processed for histochemical staining, antibody binding, in situ nucleic acid hybridization, amplification, or a combination thereof. The tissue specimens may be examined by microscopy, but other techniques for examining cellular properties may be used (e.g., automated flow or scanning cytometry, biopolymer detection or sequence determination, autoradiography, electrophoresis of protein or nucleic acid).

For wax-impregnated sections on glass slides made by the present invention, the wax may be melted and removed prior to staining or immunohistochemistry. The tissue section is rehydrated and then analyzed as described below with stains or antibodies. After staining is completed or the histochemical reaction is developed, the slide may be coverslipped and viewed under a microscope. Alternatively, the stained or antibody-decorated specimen may be studied with an instrument for cytometry. The tissue blocks may be stored for later examination.

### CELLULAR AND MOLECULAR ANALYSES

Hematoxylin-eosin staining is commonly used for cytology and histology, and it may be used by pathologists as a standard for comparison. But other dyes and stains may be used. Enzymes endogenous to the tissue, or used as labels for antibodies and other affinity binders, may be localized in situ by an appropriate choice of substrate. The enzyme and substrate react to form a detectable product.

Antibody-antigen and ligand-receptor binding is the basis for sequence-specific detection of proteins. Proteins may be separated and isolated to at least partial purity by chromatography or electrophoresis. They may be detected by specific binding to an array, Western blotting, immunoprecitation (IP), enzyme-linked immunosorbent assay (ELISA), radioimmunoassay (RIA), and immunohistochemistry (IHC).

Tissue sections preserved by the present process may be subjected to immunohistochemistry. Antigen is preserved by the present invention and appropriately chosen tissue processing conditions. Nonspecific binding sites are blocked, antigen is bound by specific antibody (i.e., the primary antibody), and nonbound antibody is removed. If labeled with a probe or signal generating moiety, the primary antibody may be detected directly but it is preferred to attach the probe to a protein (e.g., a secondary antibody) that specifically binds the primary antibody. Secondary antibody may be raised against the heavy or light chain constant region of the primary antibody. This amplifies the signal generated by an antigen-antibody conjugate because each primary antibody will bind many secondary antibodies. Alternatively, amplification may occur through other specific interactions such as biotin-streptavidin. Antibody binding is performed in a small volume to reduce usage of expensive reagents and maintain a high binding rate; evaporation of this small volume is reduced by incubation in a humidity chamber. The signal generating moiety is preferably an enzyme which is not otherwise present in the tissue: for example, alkaline phosphatase and horseradish peroxidase may be attached to the secondary antibody or conjugated to streptavidin. Substrates are available for these enzymes that generate a chromogenic, fluorescent, or luminescent product that can be detected visually.

The staining pattern for antigen may be used to localize expression of antigen in the context of cellular structures revealed by counterstaining. Antigen expression can be use to identify cell or tissue type, developmental stage, tumor prognostic markers, degenerative metabolic processes, or infection by a pathogen.

Antigen-antibody binding may also be visualized with radioactive, fluorescence, or colloidal metal probes by autoradiography, epifluorescent microscopy, or electron microscopy, respectively. Alternatively, antigen may be extracted from tissue sections and directly detected or examined. For example, instead of immunohistochemistry, the antigen may be extracted, separated on a native or denaturing polyacrylamide gel, and detected by Western blotting.

Similar probes may be used to detect nucleic acid in the tissue section by in situ hybridization to identify genetic mutations or transcripts. Alternatively, the nucleic acid (e.g., DNA or RNA) may be extracted from tissue sections and directly detected or otherwise examined, or amplified prior to further genetic analysis.

The present invention is compatible with preparation of nucleic acids (e.g., DNA or RNA) from tissue before or after processing. See Ausubel et al. (Current Protocols in Molecular Biology, New York, NY: Greene, 2002) and Sambrook & Russell (Molecular Cloning, 3rd Ed., Woodbury, NY: CSHL, 2001) for molecular biology techniques.

The compositions and procedures of the present invention preserve material for genetic analysis and allows room temperature preservation and/or storage of tissue. Thus, genetic study is possible for tissues collected routinely in the pathology laboratory. Cytological observations may be correlated with genetic information by analyzing sorted cells by staining or antibody binding, and preparing nucleic acids from them for genetic analysis. Similarly, histological observations may be correlated with genetic information by analyzing one section by staining or antibody binding, and preparing nucleic acids from an adjacent section for genetic analysis. Anatomic details may be seen by reconstruction of serial sections. For example, diseased and normal regions of the same section may be compared to detect genetic differences (e.g., chromosomal rearrangements, mutations, levels of transcription), disease history or progression may be characterized by comparing genetic differences in samples taken at several time points, and tumor evolution may be assessed by following the accumulation of genetic differences from primary cancer to metastasis.

Mutations may be germline and used to trace genetic predisposition of disease, or mutations may be somatic and used to determine genetic alterations in disease pathogenesis. The disease may be a metabolic or neurologic disorder, malignancy, developmental defect, or caused by an infectious agent.

For genetic analysis, formaldehyde-induced DNA abnormalities are eliminated and extraction of nucleic acid from archival material is enhanced. The study of RNA from preserved and/or stored tissue opens many previously unavailable avenues for diagnostic and research applications. Conventional RNA preservatives which inhibit or inactivate ribonucleases (e.g., ammonium chloride or sulfate, β-mercaptoethanol, diethyl pyrocarbonate, guanidine thiocyanate, placental ribonuclease inhibitor, urea) are not required to preserve fresh tissue in accordance with the present invention, but they may be used during extraction and isolation of RNA from preserved tissue. N-lauryl sarcosine and/or other detergents (e.g., TRITON X-100) may be used to lyse cell membranes and dissociate ribonucleoprotein complexes. RNA is precipitated by lithium chloride, but loss of RNA smaller than 5.8S can be minimized by preferential high-salt precipitation with isopropanol. Commercial kits for extracting and isolating RNA are available (e.g., Ambion, BD Biosciences Clontech, Invitrogen, Promega, Stratagene). RNA isolation techniques are described by Chirgwin et al. (Biochemistry, 18:294-299, 1979); Chomczynski & Sacchi (Anal. Biochem., 162:156-159, 1987); and in U.S. Patents 4,843,155, 5,010,183, 5,234,809, and 5,346,994. Solid tissue may be frozen and ground to a powder with a mortar and pestle, homogenized in DOUNCE or POLYTRON equipment, vortexing, sonication, use of bead or freezer mills, or a combination thereof. Crude or only partially purified DNA or RNA preparations may be genetically analyzed.

RNA may be isolated and at least partially purified in solution or by binding to a solid substrate (e.g., clay, silica, filter membrane, paramagnetic bead, cellulose in suspension or as a sheet). For example, RNA can be separated from DNA, proteins, and other biomolecules by binding to oligo(dT), differential precipitation, electrophoresis, sedimentation through a cushion, buoyant flotation in a gradient, or the like. Inactivation of ribonucleases in solutions or other reagents with diethyl pyrocarbonate (DEPC) is recommended.

The amount of RNA extracted from tissue may be measured by UV absorbance (an extinction coefficient of 1 OD₂₈₀/cm is 40 µg/ml RNA) or stoichiometric dye binding. Contamination can be assessed by UV absorbence: the OD₂₆₀/OD₂₈₀ ratio should be between 1.8 to 2.0 for substantially pure RNA, although the source of the tissue may bias the ratio to be greater than two. The strong secondary structure of RNA makes it difficult to visualize migration on an ethidium bromide (EtBr)-stained agarose gel after nondenaturing electrophoresis: multiple bands or a smear may result from a single RNA species separated under native conditions. Therefore, agarose or polyacrylamide gel electrophoresis under denaturing conditions (e.g., aldehydes, formamide, urea) is preferred to assess the integrity of RNA. Total RNA from a eukaryote will migrate under denaturing conditions as sharp bands of 28S and 18S ribosomal RNA (rRNA) in a ratio of 2:1 and a smear of messenger RNA (mRNA) from about 6 Kb to about 0.5 Kb. The 28S rRNA band should be approximately twice as intense as the 18S rRNA band; the smear of mRNA should be more intense between 2.0 Kb and 1.5 Kb. Only the mRNA smear should be visualized for polyadenylated (polyA⁺) RNA. Densitometry of the rRNA bands can quantitate the degree of degradation. Alternatively, the mRNA may be subjected to a reverse transcription-polymerase chain reaction (RT-PCR) with primers to amplify a ladder of differently-sized products. Larger products should be reduced before smaller products because longer RNA are expected to be degraded faster than shorter RNA.

RNA extracted from preserved tissue in accordance with the present invention may be manipulated by genetic engineering and/or assayed. For example, RNA may be amplified by known techniques (e.g., direct transcription by an RNA-dependent RNA polymerase, transcription of double-stranded DNA containing a promoter recognized by a DNA-dependent RNA polymerase, replication by an RNA-dependent replicase). The RNA may be reverse transcribed to cDNA: the cDNA may then be amplified by known techniques (e.g., polymerase chain reaction or PCR, ligation chain reaction or LCR, transcription mediated transcription or TMA, transcription or replication). If a double-stranded DNA corresponding to the RNA is produced, then either RNA or cRNA may be transcribed using promoters or primers at the ends of a DNA substrate. Capture of target nucleic acid on a solid substrate is possible before, during, or after hybridization to localize or concentrate the RNA, cRNA or corresponding DNA.

Stringent hybridization is the basis for sequence-specific identification of nucleic acids. DNA may be detected by Southern blotting; RNA may be detected by Northern blotting. In solution, DNA or RNA may be detected by nuclease protection. Nucleic acids may be separated and isolated to at least partial purity by chromatography or electrophoresis.

Multiplex analysis may be used to monitor expression of different genes at the same time in parallel. Such multiplex analysis may be performed using probes complementary to the target nucleic acid (e.g., RNA, cRNA or corresponding DNA, single- or double-stranded DNA) arranged on a substrate (e.g., bead, fiber, membrane, or chip). An array may be spotted with probe or the probe may be synthesized in situ on a planar substrate; the probe may also be attached to individual beads or fibers as an ordered library. Simultaneous solution methods such as real-time relative RT-PCR, multiprobe ribonuclease protection assay or multiprimer pair amplification associate each transcript with a different length of detected product which is resolved by separation on the basis of molecular weight. Gene expression profiling or sequence identification may be performed using array or serial analysis of gene expression (SAGE) technology.

Amino acid sequences might be determined by Edman degradation, gel electrophoresis or chromatography, or mass spectrometry (e.g., matrix-assisted laser desorption ionization or electrospray ionization coupled with time-of-flight; triple-quadrupole, quadrupole-TOF, or ion trap detection) from preserved and/or stored tissue. Nucleotide sequences might be determined by Maxam-Gilbert, Sanger, or sequencing-by-hybridization (SBH) procedures performed on nucleic acids (or amplified products thereof) from preserved and/or stored tissue. But the aforementioned techniques can detect and/or identify antigens and nucleic acids without necessarily determining their sequences.

The following examples demonstrate the usefulness and substantiate the effectiveness of the invention. In comparative examples, the advantages of the invention in comparison to the prior art are shown. These examples are intended to be merely illustrative of the invention, and are not intended to restrict or otherwise limit its practice.

### EXAMPLES

### EXAMPLE 1: DNA Extraction

DNA was extracted from tissue sections after preservation in different solutions (e.g., 10% polyethylene glycol 300 and 90% methanol) using an AquaPure Genomic DNA Isolation kit (Bio-Rad Laboratories) as follows:
Twenty mg of freshly minced mouse liver tissue or the same tissue preserved in 10% PEG/90% methanol was placed in a 1.5 ml microfuge tube containing 300 µl lysis solution. 1.5 µl of Proteinase K solution (20 mg/ml) was added to the lysate and mixed by inverting following by overnight incubation at 55°C. To the lysate, 1.5 µl of RNAse A solution (4 mg/ml) was added, mixed gently and incubated at 37°C for 60 min. Samples were cooled to room temperature and 100 µl of protein precipitation solution was added. Samples were vortexed for 20 sec and then centrifuged at 16000 g for 3 min. Supernaturant containing DNA was transferred to a fresh tube and precipitated with 300 µl of 100% isopropanol. Samples were mixed and centrifuged at 16000 g for one min. The DNA pellet was washed using 70% ethanol followed by air drying for 15 min. DNA was dissolved in 100 µl of DNA hydration solution and concentration was determined by UV spectrophotometry.

Ten mg of DNA was digested using TaqI, EcoRI or BamHI restriction endonuclease. Five units of enzyme was used per microgram of DNA in overnight digestion using appropriate restriction enzyme buffer in total volume of 200 µl. Twenty µl was run on 0.8% agarose gel to determine whether DNA was digested. DNA Results:
1. Preserved tissue provided a similar quantity of DNA as fresh tissue.
2. When tissue was preserved in formalin, about 30% less DNA was extracted as compared to extraction of fresh tissue or tissue preserved in 10% PEG/90% methanol.
3. Genomic DNA extracted from tissue preserved in 10% PEG/90% methanol could be digested with common restriction enzymes and was comparable in quality to DNA from fresh or formalin-fixed tissue.

### EXAMPLE 2: RNA Extraction

RNA was extracted from tissue sections after preservation in different solutions (e.g., 10% polyethylene glycol 300 and 90% methanol) using a Trizol RNA Isolation kit (Gibco BRL) as follows:
Fifty mg of fresh tissue or the same tissue preserved in 10% PEG/90% methanol was placed in about one ml of Trizol reagent and disrupted using a Polytron homogenizer. Samples were incubated at room temperature for 5 min and 0.2 ml of chloroform was added followed by hand mixing for 15 sec. Samples were centrifuged at 12000 g for 15 min at 5°C. Aqueous phase was removed and precipitated using 0.5 ml of isopropyl alcohol. Following 10 min incubation at room temperature, samples were cooled to 5°C and centrifuged at 12000 g for 10 min. The RNA pellet was washed in 70% ethanol, air dried for 15 min, and dissolved in 100 µl of ribonuclease-free H₂O. The amount of RNA extracted was determined by UV spectrophotometry. Its quality was assessed by separating the RNA on a denaturing agarose gel and comparing the intensities of 28S and 18S ribosomal RNA bands.

### EXAMPLE 3: Detection of Antigen in Tissue Sections

As taught in U.S. Patent 6,207,408, immunohistochemistry can be performed on tissue sections after fresh tissues were processed. In comparison, immunohistochemistry was performed after preservation in different solutions (e.g., 10% polyethylene glycol 300 and 90% methanol) and then processed in accordance with U.S. Patent 6,207,408. Results were compared to preserved tissue processed by conventional methods.

Uterine leiomyoma, malignant melanoma, pyelonephritis of kidney, and normal liver were studied. The following antibodies were used: epithelial markers (e.g., wide-spectrum cytokeratin, cytokeratin 7, epithelial membrane antigen); melanocyte markers (e.g., S100 protein, Melan A, tyrosinase, HMB-45); nuclear antigens (e.g., estrogen and progesterone receptors, Ki-67); leukocyte antigens (e.g., CD45, CD68, CD31); muscle markers (e.g., desmin, cladesmon, muscle actin); endothelial markers (e.g., Factor VIII related antigen, CD31); and hepatocellular and renal cell antigens. For all tissues, the immunohistochemical results were similar to those fixed in formalin except for weaker reactivity with antibody against hepatocellular antigen.

Immunohistochemical Procedure (steps 12 to 18 were carried out in a Dako Autostainer instrument):
1. Paraffin sections were cut to 3 microns.
2. Paraffin was melted by placing slides in a 58°C oven (or preferably in a 37°C oven) for 30 min.
3. Slides were dewaxed in xylene for 10 min.
4. Slides were rehydrated in a decreasing series of ethanol solutions (i.e., two baths of absolute, two baths of 95%, and one bath of 90%) for one min each.
5. Endogenous peroxidase was blocked with a solution of 6% hydrogen peroxide (H₂O₂) for 10 min.
6. Slides were rinsed by submerging in tap water for one min.
7. Racks of slides were placed in PBS bath submerged for one min.
8. Prepare target retrieval (TR) by adding 20 ml target retrieval (DAKO S1699) plus 180 ml dH₂O in a green staining dish. Add dH₂O to steamer and turn on steam. Place staining dish containing target retrieval solution inside steamer and let it heat for 30 min. TR solution should heat to 90°C.
9. Take out staining dish from steamer and place slides inside dish (use gloves) and steam for 20 min.
10. After steaming, let slides cool down in same container for 30 min.
11. Slides were placed in PBS buffer at room temperature (alternatively, slides may be stored in the buffer for 2 min to 18 hr and then staining continued).
12. Tissue sections were incubated with (a) Avidin Solution (DAKO X0590) for 10 min. The Avidin Solution was then rinsed off and tissue sections were incubated with (b) Biotin Solution (DAKO X0590) for 10 min. The Biotin Solution should be washed off before application of the first step of the staining procedure.
13. Specific primary antibody was added to each slide and then incubated for 30 min in a humidity chamber.
14. Slides were returned to the rack and the rack was submerged in a PBS bath for 2 min. Excess PBS was dried off each slide. Linking solution (DAKO LSAB + Kit, biotinylated anti-mouse, anti-rabbit and anti-goat) was added and incubated for 25 min in a humidity chamber.
15. Slides were returned to the rack and the rack was submerged in a PBS bath for 2 min.
16. Excess PBS was dried off each slide. Streptavidin-peroxidase-conjugate was added and incubated for 25 min in a humidity chamber.
17. Rack was submerged in PBS bath for 2 min and slides were then reacted with DAB chromogen (DAKO K3468). The slides were rinsed in fresh PBS for 4 min.
18. Slides were dried and counterstained with hematoxylin. NOTE: For nuclear antigens, dry excess PBS from slides and apply 1% cupric sulfate for 5 min. Slides were rinsed in tap water for 2 min and then placed in 0.2% fast green for one or a couple of seconds.
19. Slides were dehydrated through a series of alcohol solutions and then cleaned in xylene and coverslip.

### EXAMPLE 4: Comparison of Different Chemical Compositions

A preferred composition is a nonaqueous solution with 10% polyethylene glycol 300 (PEG) and 90% methanol. Given the need for a preservative composition that is amenable to both morphological and genetic analysis because morphology and RNA are preserved in the same tissue specimen, a variety of solutions were assessed for their ability to preserve at ambient temperature both characteristics of fresh, solid tissue and their compatibility with tissue processing in accordance with U.S. Patent 6,207,408 and conventional methods.

RNA was degraded completely after the fresh tissue has been in contact for 15 min with either formalin (i.e., 10% formaldehye in an aqueous buffer), gluteraldehyde, or methacam (i.e., 60% methanol, 30% chloroform, and 10% acetic acid). After fixation of fresh tissue in isopropanol (45%, 55% or 100%) for one hour, RNA was partially degraded. Fresh tissue fixed for 24 hr in either acetone or ethanol contained RNA, but produced inconsistent results. On the other hand, RNA was protected against degradation for up to three weeks at ambient temperature if fresh tissue has been in contact with either PEG or methanol.

The morphology of fresh tissue preserved in 10% PEG and 90% methanol was of the same quality as formalin-fixed tissue. Similarly, immunohistochemistry performed on fresh tissue preserved in 10% PEG and 90% methanol was of the same quality as formalin-fixed tissue. Morphology was maintained for at least seven days at room temperature. RNA was protected at ambient temperature for up to three weeks; RNA was protected at 4°C for at least three weeks; RNA was protected at 37°C for at least three days.

**Table 1. Preservation of RNA at Room Temperature (about 25°C)**

| Preservation Time | | 15 min | 1 hr | 4 hr | 8 hr | 24 hr | 48 hr | 1 wk | 2 wk | 3 wk |
|---|---|---|---|---|---|---|---|---|---|---|
| 1 | PEG | ++ | ++ | ++ | ++ | ++ | ++ | ++ | ++ | ++ |
| 2 | Methanol | ++ | ++ | ++ | ++ | ++ | ++ | ++ | ++ | ++ |
| 3 | Ethanol* | ++ | ++ | ++ | ++ | ++ | ++ | ++ | ++ | ++ |
| 4 | Acetone* | ++ | ++ | ++ | ++ | ++ | ++ | ++ | ++ | ++ |
| 5 | Xylene | ++ | + | 0 | 0 | 0 | 0 | 0 | 0 | 0 |
| 6 | Isopropanol | ++ | + | + | + | + | + | + | + | + |
| 7 | 55% isopropanol | ++ | 0 | 0 | 0 | 0 | 0 | 0 | 0 | 0 |
| 8 | 40% isopropanol | ++ | 0 | 0 | 0 | 0 | 0 | 0 | 0 | 0 |
| 9 | 10% formalin | 0 | 0 | 0 | 0 | 0 | 0 | 0 | 0 | 0 |
| 10 | Chloroform | + | 0 | 0 | 0 | 0 | 0 | 0 | 0 | 0 |
| 11 | Glutaraldehyde | 0 | 0 | 0 | 0 | 0 | 0 | 0 | 0 | 0 |
| 12 | Methacarn | 0 | 0 | 0 | 0 | 0 | 0 | 0 | 0 | 0 |

| | | | | | | | | | | |
|---|---|---|---|---|---|---|---|---|---|---|
| ++ No degradation of 28S and 18S ribosomal RNA bands + Degradation of 28S and 18S ribosomal RNA bands and/or lower band intensity 0 No bands * Inconsistent results, perhaps due to water content of tissue | | | | | | | | | | |

For preservation of a tissue, the polyethylene glycol 300 (PEG) concentration is between 10% to 15% and the methanol (MeOH) concentration is between 85% to 90%. Here, tissue (e.g., kidney, liver, skin, uterus) was contacted with the solution at about 25°C for one hour to seven days. Maintenance of morphology (HISTO) was assessed after conventional tissue processing (TissueTek programmed as shown in U.S. Patent 6,207,408) or tissue processing in accordance with U.S. Patent 6,207,408; while protection of RNA (RNA) was assessed after tissue processing in accordance with U.S. Patent 6,207,408. Tissue was manually processed to prevent contamination with ribonuclease or other degradative enzymes. Satisfactory histomorphology is indicated by (+) and suboptimal morphology (i.e., fragmentation of section, irregular dye staining, variability in immunohistochemistry) is indicated by (+/-). RNA quality is indicated by ++, + and 0 (see the legend of Table 1).

**Table 2. Varying Concentrations of PEG and Methanol**

| Preservation Time | | | 1 hr | | 24 hr | | 72 hr | | 1 wk | |
|---|---|---|---|---|---|---|---|---|---|---|
| | PEG | MeOH | RNA | HISTO | RNA | HISTO | RNA | HISTO | RNA | HISTO |
| A | 0 | 100 | ++ | (+/-) | ++ | (+) | ++ | (+) | ++ | (+) |
| B | 10 | 90 | ++ | (+) | ++ | (+) | ++ | (+) | ++ | (+) |
| C | 20 | 80 | ++ | (+) | ++ | (+) | + | (+) | ++ | (+) |
| D | 30 | 70 | ++ | (+) | + | (+) | 0 | (+) | 0 | (+) |
| E | 40 | 60 | + | (+) | + | (+) | 0 | (+) | 0 | (+) |
| F | 50 | 50 | + | (+/-) | + | (+) | 0 | (+) | 0 | (+) |

Both Table 2 and Figure 1 show that 10% PEG and 90% methanol provides a composition that preserved both morphology and RNA. The ratio between 28S and 18S ribosomal RNA bands, as well as the smear of high molecular weight mRNA, confirmed the quality of the extracted RNA. A composition of methanol alone preserved RNA but hardening of tissue by contact with 100% methanol for a long time was an obstacle to histological analysis. At the other extreme, high concentrations of PEG preserved RNA but did not preserve morphology. Compositions of the invention, however, preserved both morphology and RNA content of tissues.

Preservation of tissue with compositions of the invention did not require reduced temperature. Preservation and storage was possible at ambient temperature (e.g., about 25°C). Therefore, refrigeration or freezer facilities are not needed during transport or storage of tissue specimens.

### EXAMPLE 5: Comparison with RNAlater

RNAlater (Ambion) has been described by Florell et al. as preserving "both the integrity of tissue for pathologic diagnosis, and the RNA for molecular analyses" (Mod. Pathol., 14:116-128, 2001). Although the chemical composition of RNAlater is different from the invention, conventional tissue processing or tissue processing in accordance with U.S. Patent 6,207,408 was used to determine if morphology was preserved.

Mouse liver was preserved in 10% PEG and 90% methanol or RNAlater for 48 hr, 72 hr, or one week. Figure 2 shows that while morphology was preserved in tissue incubated in 10% PEG and 90% methanol, RNAlater did not preserve morphology at ambient temperature. After only 48 hr of incubation of tissue in RNAlater at about 25°C, there was disintegration of the nuclear membrane and condensation of the nuclear chromatin. There was progressive loss of morphological characteristics on prolonged incubation in RNAlater. But incubation of tissue in 10% PEG and 90% methanol at room temperature preserved morphological characteristics consistently for at least three weeks.

### EXAMPLE 6: Mouse and Human Tissue Studies

Both mouse and human samples were utilized in this study. In the initial phase, mouse liver tissue was used to determine the effect of UMFIX (i.e., 10% polyethylene glycol 300 and 90% methanol) on macromolecules. Mouse liver was excised from three-month old C57BL/6 female mice. Cubes of tissue weighing approximately 50 mg were immediately immersed in UMFIX or 10% phosphate buffered formalin. Similar-sized cubes were snap-frozen in liquid nitrogen, and stored at -75°C to serve as control specimens.

In the later phase of the study, human tissues were utilized, both for molecular assays and determination of the effect of UMFIX on histomorphology as well as on histochemical and immunohistochemical properties. Human tissues (e.g., adrenal, breast, colon, eye, esophagus, kidney, liver, lung, lymph node, skeletal muscle, pancreas, parathyroid, parotid, prostate, skin, small intestine, spleen, thyroid, tonsil, and uterus) were collected from one to thirty minutes after surgery at the University of Miami, Jackson Memorial Medical Center. Representative samples were taken primarily from the large, surgically-excised specimens. The main surgical specimens were fixed in 10% neutral buffered formalin and processed overnight using conventional techniques. Parallel tissue blocks were fixed in UMFIX and 10% neutral buffered formalin, and were processed according to a rapid processing technique under controlled RNase-free conditions (Morales et al. Arch. Pathol. Lab. Med. 126:583-590, 2002). Adjacent sections were also snap frozen in liquid nitrogen. Mouse and human tissues were stored in UMFIX at both 4°C and ambient temperature (22°C) for periods of time ranging from one hour to eight weeks.

### PCR, RT-PCR, and Real-Time PCR

PCR was performed using mouse G3PDH primers (Clontech, Palo Alto, CA) using 0.5 µg of Rnase-treated isolated DNA and Qiagen Taq PCR Mastermix (Qiagen, Valencia, CA). Alternatively, the same primer was used with Qiagen Quantitect Cybergreen Mastermix and a Bio-Rad (Hercules, CA) iCycler. The conditions for PCR of DNA were: 95°C for 15 min; 35 cycles at 94°C for 45 sec, 60°C for 45 sec, 72°C for two min; and hold for 7 min at 72°C. Furthermore, mouse G3PDH primers (Biosource, Camarillo, CA) were used with 0.5 µg of Dnase-treated RNA for real-time RT-PCR using Qiagen Quantitect Cybergreen Mastermix or Qiagen Quantitect probe Mastermix on Bio-Rad iCycler. Conditions for PCR were an initial reverse transcription for 30 min at 50°C followed by Taq activation at 95°C for 20 min followed by 40 cycles at 95°C for 15 sec and 60°C for 1 min.

### Expression Profiling

Total RNA was extracted from UMFIX-treated tissues before and after processing and paraffin embedding, and then used for nylon-based cDNA microarrays of apoptosis-related genes (HS-002-12, Superarray, Bethesda, MD) following the manufacturer's protocol. X-ray densitometric results were obtained with a Chemimager 5500 Gel Documentation System (Alpha Innotech, San Leandro, CA). Data were analyzed using Genesis software (Genesis, Graz, Austria). Statistical analysis was performed with the aid of Statistica software (StatSoft, Tulsa, OK).

### Protein Isolation and Detection (Western Blotting)

Total protein was extracted using a standard protocol. Briefly, samples of mouse liver were homogenized in 20 µl T-PER reagent per mg of tissue (Pierce Biotechnology, Rockford, IL). Protein concentration was measured using a Coomassie protein assay (Bio-Rad) using bovine serum albumin as standard. For 2D gels, protein extract was used according to the ReadyPrep^{™}2-D Starter Kit instructions (Bio-Rad). Briefly, 11.0 cm IPG (pH 3-10) strips were incubated overnight at room temperature with 250 µg of protein in 185 µl of rehydration buffer containing 10 ml of 8 M urea, 2% CHAPS, 50 mM dithiothreitol (0.2% w/v), Bio-Lyte® 3/10 ampholytes, and bromophenol blue. Rehydrated strips were then transferred to Immunoelectrophoresis Focusing Chamber (Bio-Rad) and run according to the manufacturer's recommended protocol (5.3 hr at 30,000 volt/hr). Strips were then equilibrated for 10 min in a mixture of 6 M urea, 2% SDS, 0.375 M Tris-HCl (pH 8.8), 20% glycerol, and 2% (wlv) DTT, and then 10 min in the same buffer without DTT but with added iodoacetamide. The strips were then laid over the 11.0 cm Criterion Gels and subjected to electrophoresis in the Criterion System (Bio-Rad) at 200 V₁ constant for 65 min using 1X Tris/glycine/SDS running buffer. Gels were then washed in 10% methanol and 7% acetic acid for 30 min and stained overnight using Sypro-Ruby Protein stain (Bio-Rad). After a 10 min wash in 10% methanol and 7% acetic acid, gels were rinsed in ddH₂O and analyzed using a Chemimager 5500 Gel Documentation System (Alpha Innotech) equipped with CCD camera. Tiff images were analyzed for automated spot matching using PDQuest software (Bio-Rad). Alternatively, protein was isolated by homogenizing the tissue and adding 4.1 ml of boiling lysis buffer (10 mM Tris, pH 7.4, 1 mM sodium orthovanadate, 1% SDS) for 15-20 sec. Next, 0.9 ml of 6X electrophoresis sample buffer (360 mM Tris pH 6.8, 600 mM DTT, 12% SDS, 60% glycerol, 0.018% bromophenol blue) was added and mixed well. Samples were heated again at 95°C for 30 sec in a heat block.

Western blot transfer was performed by Becton Dickinson Powerblot Service. Antibodies were selected based on their activity to bind proteins with various cellular locations and different molecular weights. The antibodies were against Caveolin 1, Casein Kinase II alpha, beta-Catenin, Bcl-2, Adaptin beta, GDNFR-alpha, PKC alpha, PAF53, NF-kappa B (p65), Phospholipase C gamma (BD, Lexington, KY). To study preservation of phosphorylated protein phosphorylation; five proteins were selected (Caveolin, ERKI , GSK-3 beta, p38 alpha/ SAPK2a, Stat1). Antibodies against the native and phosphorylated states of these five proteins were used. In addition, another 13 antibodies were run as control. Briefly, 66 µg of protein was loaded in each well across the entire width of the 4-15% gradient SDS-PAGE (Bio-Rad Criterion IPG Well Comb). The gel was run for 1.5 hr at 150 V then transferred to Immobilon-P membrane (Millipore, Bedford, MA) for 2 hr at 200 mA using a Hoefer TE wet electrophoretic transfer apparatus (Amersham Biosciences, Piscataway, NJ). Following transfer the membrane was immersed for one hour with gelatin blocking buffer. Next, the membrane was clamped with a western blotting manifold that isolates 40 channels across the membrane. In each channel, a primary antibody mix was added and incubated for 1 hr at 37°C. The blot was removed from the manifold, washed and incubated for 45 min at 37°C with secondary goat anti-mouse immunoglobulin conjugated to Alexa680 fluorescent dye (Molecular Probes, Eugene, OR). The membrane was washed, dried, and scanned using the Odyssey Infrared Imaging System (LICOR, Lincoln, NE).

### RESULTS

The quality and quantity of mouse liver RNA extracted from the frozen and UMFIX-preserved tissue was comparable, whereas formalin-fixed tissues yielded significantly degraded RNA as indicated by the absence of 28S and 18S ribosomal RNA bands, as shown before. Although RNA extracted from formalin-fixed tissue was significantly degraded, it could be used to amplify small products by RT-PCR. But significantly more RNA from liver tissue fixed for one or 24 hr in formalin was needed for quantitative RT-PCR as compared to RNA from fresh mouse liver or liver tissue exposed to UMFIX for one or 24 hr. As was shown with DNA extracted from tissue, the quality of RNA was not substantially changed by longer exposure to UMFIX but was significantly different for a longer time of fixation by formalin. After one day in UMFIX, high molecular weight RNA was extracted from 25/35 samples. Similar success was achieved after 2 to 7 days (19/22 samples) and 8 to 30 days (16/18 sample).

UMFIX- preserved liver tissue hardened and impregated by the rapid processing technique under controlled RNase-free conditions and embedded in paraffin yielded intact RNA comparable to that from fresh frozen tissue. This was confirmed by observing the ratio between the 28S and 18S ribosomal RNA bands in agarose gel electropho-resis, as well as using an Agilent RNA 6000 Nanochip for quantitation. Further-more, human tissue (e.g., metastatic carcinoma to the brain) that was exposed to UMFIX, processed by the rapid processing technique, and embedded in paraffin yielded nondegraded RNA after one day, four weeks, and eight weeks of storage at room temperature. Expression profiling of RNA extracted from fresh samples and UMFIX-preserved paraffin-embedded tissues after one day, four weeks, and eight weeks of storage at room temperature exhibited comparable patterns and intensities for 94 apoptosis-related genes. The expression levels using a cDNA microarray were similar at various time points post-processing up to 8 weeks (Pearson coefficient r>0.85, p<0.05). The minor difference between the results was attributed to tissue heterogeneity.

Mouse liver preserved in UMFIX for one hour revealed a two-dimensional gel pattern of protein spots identical to that obtained with fresh samples. In contrast to the distinct spots observed with UMFIX-preserved samples, protein extracts from formalin-fixed tissue produced a smear without any distinct spots. Furthermore, no similarity could be observed between fresh samples and formalin-exposed samples by PDQuest software, despite easing the matching criteria. Evaluation of number and location of spots on the gels aided by PDQuest software showed considerable homology between UMFIX samples and protein extracts of the fresh tissue. The same findings were observed by polyacrylamide gel electrophoresis (PAGE); distinct bands were observed with fresh and UMFIX-preserved samples whereas formalin-fixed samples produced an indistinct smear. Similarly, Western blots from PAGE showed strong distinct bands for UMFIX-preserved samples compared to formalin-fixed samples. Antibodies were chosen based on their molecular weight and cellular location. All of the 10 tested and 12 control antibodies reacted with samples fixed for 1 hr in UMFIX: 20 of those antibodies also had strong detectable bands in samples fixed up to 24 hr. Conversely, only six antibodies were reactive in samples fixed in formalin, with a considerably lower intensity.

Of the five proteins selected for phosphorylation studies, the results of Western blotting were similar between fresh and UMFIX-preserved samples for one hour. Two of the proteins were lost after 24 hour of fixation. In formalin-fixed samples, only one native and one phosphorylated sample was detected in one hour and no results were obtained from 24 hr treated samples.

All modifications and substitutions that come within the meaning of the claims and the range of their legal equivalents are to be embraced within their scope. A claim using the transition "comprising" allows the inclusion of other elements to be within the scope of the claim; the invention is also described by such claims using the transitional phrase "consisting essentially of" (i.e., allowing the inclusion of other elements to be within the scope of the claim if they do not materially affect operation of the invention) and the transition "consisting" (i.e., allowing only the elements listed in the claim other than impurities or inconsequential activities which are ordinarily associated with the invention) instead of the "comprising" term. Any of the three transitions can be used to claim the invention.

It should be understood that an element described in this specification should not be construed as a limitation of the claimed invention unless it is explicitly recited in the claims. Thus, the claims are the basis for determining the scope of legal protection granted instead of a limitation from the specification which is read into the claims.

Moreover, no particular relationship between or among limitations of a claim is intended unless such relationship is explicitly recited in the claim (e.g., the arrangement of components in a product claim or order of steps in a method claim is not a limitation of the claim unless explicitly stated to be so).

The described embodiments should be considered only as illustrative, not restrictive, because the scope of the legal protection provided for the invention will be indicated by the appended claims rather than by this specification.

## Claims

1. A composition for preservation and/or storage of a tissue, wherein the tissue comprises antigen and nucleic acid, to maintain morphology for histology, wherein the composition is a nonaqueous solution comprising 10-15% polyethylene glycol (PEG) and 85-90% methanol; wherein the PEG has a molecular weight less than 600 daltons.

2. The composition according to Claim 1, wherein the nonaqueous solution consists of 10-15% polyethylene glycol (PEG) and 85-90% methanol.

3. The composition according to Claim 1, wherein the nonaqueous solution comprises about 10% polyethylene glycol (PEG) and about 90% methanol.

4. The composition according to Claim 1, wherein the nonaqueous solution consists of about 10% polyethylene glycol (PEG) and about 90% methanol.

5. The composition according to any one of Claims 1-4, wherein the PEG has a molecular weight of 400 daltons or less.

6. Use of the composition according to any one of Claims 1-5 to preserve and/or store at least a tissue.

7. A method of making the composition according to any one of Claims 1-5 comprising mixing PEG and methanol.

8. A tissue holder containing the composition according to any one of Claims 1-5 and adapted to hold at least a tissue.

9. A method of preserving a tissue comprising contacting at least the tissue with the composition according to any one of Claims 1-5.

10. A method of storing tissue comprising contacting at least partially preserved tissue with the composition according to any one of Claims 1-5.

11. A method of processing tissue preserved and/or stored using the composition according to any one of Claims 1-5 for genetic analysis comprising extracting nucleic acid from at least a portion of the tissue.

12. The method according to Claim 11, wherein the nucleic acid is RNA.

13. The method according to Claim 11, wherein the nucleic acid is DNA.

14. A method of processing tissue preserved and/or stored with the composition according to any one of Claims 1-5 for immunologic analysis comprising extracting antigen from at least a portion of the tissue.

## Patentansprüche

1. Zusammensetzung zur Konservierung und/oder Lagerung eines Gewebes, wobei das Gewebe Antigen und Nukleinsäure umfasst, um die Morphologie zur Histologie zu erhalten, wobei die Zusammensetzung eine nicht-wässrige Lösung, umfassend 10-15% Polyethylenglycol (PEG) und 85-90% Methanol, ist; wobei das PEG ein Molekulargewicht von weniger als 600 Dalton hat.

2. Zusammensetzung gemäß Anspruch 1, wobei die nicht-wässrige Lösung aus 10-15% Polyethylenglycol (PEG) und 85-90% Methanol besteht.

3. Zusammensetzung gemäß Anspruch 1, wobei die nicht-wässrige Lösung etwa 10% Polyethylenglycol (PEG) und etwa 90% Methanol umfasst.

4. Zusammensetzung gemäß Anspruch 1, wobei die nicht-wässrige Lösung aus etwa 10% Polyethylenglycol (PEG) und etwa 90% Methanol besteht.

5. Zusammensetzung gemäß einem der Ansprüche 1-4, wobei das PEG ein Molekulargewicht von 400 Dalton oder weniger hat.

6. Verwendung der Zusammensetzung gemäß einem der Ansprüche 1-5, um mindestens ein Gewebe zu konservieren und/oder zu lagern.

7. Verfahren zum Herstellen der Zusammensetzung gemäß einem der Ansprüche 1-5, umfassend das Mischen von PEG und Methanol.

8. Gewebehalter, der die Zusammensetzung gemäß einem der Ansprüche 1-5 enthält und angepasst ist, mindestens ein Gewebe zu halten.

9. Verfahren zur Konservierung eines Gewebes, umfassend das in Kontakt bringen von mindestens dem Gewebe mit der Zusammensetzung gemäß einem der Ansprüche 1-5.

10. Verfahren zur Lagerung von Gewebe, umfassend das in Kontakt bringen von zumindest teilweise konserviertem Gewebe mit der Zusammensetzung gemäß einem der Ansprüche 1-5.

11. Verfahren zur Verarbeitung von dem unter Verwendung der Zusammensetzung gemäß einem der Ansprüche 1-5 konservierten und/oder gelagerten Gewebe für die genetischen Analyse, umfassend Extrahierung von Nukleinsäure aus mindestens einem Teil des Gewebes.

12. Verfahren gemäß Anspruch 11, wobei die Nukleinsäure RNA ist.

13. Verfahren gemäß Anspruch 11, wobei die Nukleinsäure DNA ist.

14. Verfahren zum Verarbeiten von dem mit der Zusammensetzung gemäß einem der Ansprüche 1-5 konservierten und/oder gelagerten Gewebe für die immunologischen Analyse, umfassend Extrahieren von Antigen aus mindestens einem Teil des Gewebes.

## Revendications

1. Composition pour conservation et/ou stockage d'un tissu, qui contient un antigène et un acide nucléique, afin d'en préserver la morphologie pour un traitement histologique, laquelle composition est une solution non-aqueuse comprenant 10 à 15 % d'un polyéthylèneglycol (PEG), et 85 à 90 % de méthanol, lequel PEG présente un poids moléculaire inférieur à 600 daltons.

2. Composition conforme à la revendication 1, dans laquelle la solution non-aqueuse est constituée de 10 à 15 % d'un polyéthylèneglycol (PEG) et de 85 à 90 % de méthanol.

3. Composition conforme à la revendication 1, dans laquelle la solution non-aqueuse comprend environ 10 % d'un polyéthylèneglycol (PEG) et environ 90 % de méthanol.

4. Composition conforme à la revendication 1, dans laquelle la solution non-aqueuse est constituée d'environ 10 % d'un polyéthylèneglycol (PEG) et d'environ 90 % de méthanol.

5. Composition conforme à l'une des revendications 1 à 4, dans laquelle le PEG présente un poids moléculaire inférieur ou égal à 400 daltons.

6. Utilisation d'une composition conforme à l'une des revendications 1 à 5 pour conserver et/ou stocker au moins un tissu.

7. Procédé de fabrication d'une composition conforme à l'une des revendications 1 à 5, comprenant le fait de mélanger un PEG et du méthanol.

8. Support à tissu, contenant une composition conforme à l'une des revendications 1 à 5 et adapté pour porter au moins un tissu.

9. Procédé de conservation d'un tissu, comportant le fait de mettre au moins le tissu en contact avec une composition conforme à l'une des revendications 1 à 5.

10. Procédé de stockage d'un tissu, comportant le fait de mettre le tissu au moins partiellement conservé en contact avec une composition conforme à l'une des revendications 1 à 5.

11. Procédé de traitement d'un tissu, conservé et/ou stocké au moyen d'une composition conforme à l'une des revendications 1 à 5, en vue d'une analyse génétique, comportant le fait d'extraire un acide nucléique d'au moins une partie du tissu.

12. Procédé conforme à la revendication 11, dans lequel l'acide nucléique est un ARN.

13. Procédé conforme à la revendication 11, dans lequel l'acide nucléique est un ADN.

14. Procédé de traitement d'un tissu, conservé et/ou stocké au moyen d'une composition conforme à l'une des revendications 1 à 5, en vue d'une analyse immunologique, comportant le fait d'extraire un antigène d'au moins une partie du tissu.
